# EUROPEAN PATENT APPLICATION

(11) **EP 1 568 760 A1**
(43) Date of publication of application: **31.08.2005**
(21) Application number: 05250605.2
(22) Date of filing: 03.02.2005
(51) Int. Cl.: C11B 13/00

(54) **Process for refinig a raw material comprising black liquor soap, crude tall oil or tall oil pitch**

(30) Priority: 06.02.2004 CL 2052004
(71) Applicant: Härting Glade, Thomas Francis, Santiago (CL)
(72) Inventor: Markovits Rojas, Alejandro, Montalva 6000 Santiago (CL); Markovits Schersl, Andres, Montalva 6000, Santiaqo (CL); Diaz, Miguel Angel Fuenzalida, Montalva 6000, Santiago (CL)
(74) Representative: Spencer, Michael David

(57) **Abstract**

The present invention is related to a process for the production of high quality fatty acids and rosin acids and their mixtures from a refined raw material by means of solvent extraction with a hydrocarbon solvent characterized so that the raw material has less than 25% of water. By this way, the extraction process can be performed at normal conditions and without the use or addition of a polar or partially polar solvent.

## Description

The present invention is related to a process for refining a raw material comprising black liquor soap, crude tall oil or tall oil pitch by solvent extraction of the unsaponifiable matter contained in the raw material. The raw material refined through the invented process is especially suitable for obtaining high quality fatty and rosin acids and other uses.

Tall oil is obtained through acidulation of black liquor soaps, which in turn are by-products of the Kraft pulping of wood for obtaining cellulose. This process consists of the digestion of wood chips at high temperature and pressure in diluted alkaline liquor containing sodium hydroxide and sodium sulphide as active ingredients. The digestion disrupts the cellular structure and causes the dissolution of lignin, other chemical products contained in the wood and hemicellulose. The cellulose fibre dispersed in the spent liquor from the digestion is isolated by filtration. The Spent liquor, known as black liquor, is further evaporated and calcinated for the recovery of salts and alkalis, which return to the Kraft pulping process. This operation is performed by feeding the black liquor through a series of multi-effect evaporators. After several stages of evaporation and when the concentration of solids is around 30%, a portion of the solids, known as black liquor soaps, becomes insoluble. At these conditions, the black liquor is transferred to skimming tanks where the black liquor soaps are separated on the upper part of the tank where they are isolated or skimmed out and recovered. The skimmed consists of a mixture of pasty matter with a water content between 30 and 50%.

Black liquor soaps are mainly composed by fatty and rosin acid soaps and unsaponifiable matter and minor amounts of partially soluble inorganic sodium salts, lignin, mercaptans, polysulphides, compounds that provide the dark colour and suspended fibres occasionally.

Typically, black liquor soaps are transformed into crude tall oil, which in turn can be processed, for example using distillation to produce different fractions of distilled tall oil.

The first step for transforming black liquor soaps consists on reacting them with sulphuric acid, which convert them into their respective free acids (fatty and rosin acids). The result of the acidulation is generally separated in three phases. The upper layer is called crude tall oil (CTO), and its main components are fatty and rosin acids, unsaponifiable matter, esters and some suspended solids and water. The second layer or middle layer contains most of the lignin and insoluble solids originally present in black liquor soaps. The lower layer or brine is fundamentally composed of water and sodium sulphate. Crude tall oil can be commercialized as such or refined using fractionated distillation. ' In the present invention, unsaponifiable matter is defined as the compounds present in crude tall oil which can not be saponified.

Crude tall oil is characterized by its acid number and saponification index. The acid number expresses the milligrams of KOH required to neutralize one gram of crude tall oil and the saponification index, the milligrams of KOH required to saponify one gram of crude tall oil. Table 1 shows typical values of acid number and saponification index in crude tall oil. In general, the lower the acid number, the lower the content of fatty and rosin acids, and therefore, the higher the content of unsaponifiable matter in crude tall oil.

**Table 1:**

| **Typical values of acid number and saponification index in crude tall oil samples** | | |
|---|---|---|
| | **Acid number mg KOH/g CTO** | **Saponification index mg KOH/g CTO** |
| **Southeast U.S.A.** | 165 | 172 |
| **North U.S.A. and Canada** | 135 | 166 |
| **Scandinavia** | 132 | 142 |
| **Chile** | 148 | 161 |

Crude tall oil is a dark-brown, cloud and distinctive odour liquid. Multiple compounds such as pinosylvindimethyl ether provide the dark colour. A colour measurement used in the industry of tall oil by-products is the Gardner colour scale. The distinctive odour is due in part to the presence of sulphur products as organic polysulphides.

Crude tall oil has few direct applications mainly because it is a complex and variable mixture. In addition, the applicability of crude tall oil is even more limited because of the content of unsaponifiable matter, colour and distinctive odour. Thus one of its main uses is as alternative fuel.

In the industry, crude tall oil is processed by vacuum distillations to recover fractions of fatty acids or TOFA (Tall Oil Fatty Acids) and rosin acids or TORA (Tall Oil Rosin Acids) of higher purity. Nevertheless, direct distillation of crude tall oil has the disadvantage that the unsaponifiable matter distils along with the fatty and rosin acids fractions. This situation forces the use of multiple distillation stages and high reflux rates in the distillation columns with a high impact in capital inversion and operation costs. In turn, multiple distillation stages cause thermal decomposition of tall oil compounds, affecting performance, purity and colour of the final products.

Finally, the presence of unsaponifiable matter generates multiple side stream in the fractionation process of crude tall oil; for example, tall oil heads, mainly composed by fatty acids and unsaponifiable matter, distilled tall oil or DTO, a mixture of fatty and rosin acids and unsaponifiable matter, and tall oil pitch mainly composed by rosin acids and esters from the reaction of fatty and rosin acids with unsaponifiable matter. Therefore, an important amount of fatty and rosin acids are lost in the side streams, which negatively affect the recovery performances. In addition, the purified fractions of TOFA and TORA are unsatisfactory in applications where odourless, colourless and highly pure materials are required. Generally, in the TOFA industry, one or more distillations are required in order to obtain acceptable levels of purity and colour, which, however, in many cases are not enough to compete with fatty acids from other origin.

Consequently, in order to obtain better quality fatty acids or rosin acids, the efforts made by the tall oil industry have been focused on developing techniques of unsaponifiable matter separation; although there are not processes known in the state of the art that satisfactorily solve this problem so far.

The separation of unsaponifiable matter can be done from black liquor soaps or CTO, which is previously saponified with sodium or potassium hydroxide. In both cases, the extraction of unsaponifiable matter with a mixture of polar and apolar solvents is the process that is usually performed.

The extraction with apolar solvent has technical drawbacks that have limited its application. One of them is the foam tendency of the apolar soap-solvent mixture, but the formation of very stable emulsions between the soap solution, an excellent tensoactive agent, and apolar solvent constitutes the main drawback, which complicate the separation of the mixture into two phases.

Polar solvent and water has traditionally been the solution for the formation of stable emulsions, where the polar solvent destabilizes the emulsion and also reduces the foaming problem, and then the unsaponifiable matter is extracted using suitable apolar solvent.

Some US patents disclosing processes for extracting unsaponifiable matter from black liquor soaps and crude tall oil are mentioned next.

US patent N°2,499,430 discloses a process for extracting unsaponifiable matter from CTO, which is firstly saponified with alkali, then water and isopropyl alcohol are added, and finally it is extracted with naphtha.

US patent N°2,530,809 discloses a process for extracting black liquor soaps in which alkanol (isopropyl alcohol) is used and mixed with black liquor soaps. Then, the mixture is extracted with naphtha (hydrocarbons).

US patent N°2,547,208 discloses a process for refining a solution of tall oil soaps, where the demulsifying polar solvent is dialkyl ketone. In this case the solvent has a partial polarity whose mixing properties depend on relative proportions between solvent and water. This solvent is added under full miscibility conditions and then more water is added to form two layers. The organic layer is rich in unsaponifiable matter, but the aqueous phase also contains solvent and unsaponifiable matter.

US patent N°2,866,781 discloses a process for extracting unsaponifiable matter from either black liquor soaps or CTO, which is similar to the previously described process, but the partial polarity solvent consists of acethyl esters of low molecular weight. This solvent must be eliminated from the extracted soaps before acidulation to avoid hydrolysis of acethyl esters and further contamination of the resulting brine. Moreover, the presence of solvents causes undesirable reactions in the oil phase such as the formation of esters with fatty acids.

US patent N° 3,803,114 discloses a process for extracting unsaponifiable matter of black liquor soaps where alcohol is used as the demulsifiers and hydrocarbon as the extractant.

US patent N°3,965,085 discloses a process in which aqueous acetone is used as the demulsifier and the extracting solvent is any apolar solvent.

US patent N° 5,770,749 discloses a process for obtaining sterols (Phytosterols) of black liquor soaps, where the unsaponifiable matter rich in phytosterol is extracted from soaps using a mixture of water, ketone and hydrocarbon.

The disadvantage of the disclosed processes, in which either a polar and apolar solvent or partial polarity solvent is used, is that after the refinate (extracted soap solution) is acidulated to form refined tall oil, the aqueous phase or brine ends with solvent, a low content in many cases, but too high for the environmental regulations. This fact forces to recover the solvent in the refinate, a technically complex and expensive process due to high foaming tendency. This problem will get worse as environmental regulations get more restrictive. Similarly, either alcanols, ketones, esters or any polar or partial polarity solvent described in the state of art, present undesirable reactions in the acidulation stage. Besides, because unsaponifiable matter is partially soluble in the aqueous phase with polar and partial polarity solvents, the processes described above requires multiple extraction stages in order to obtain high performance in the removal of unsaponifiable matter, having effects on process costs and recovery of solvents.

In order to avoid this drawback of the described processes, German patent application DE20006001575T20000427 discloses a process of liquid-liquid extraction of the unsaponifiable fraction of black liquor soaps, which does not use polar or partially polar solvents, but hydrocarbon solvents with 1 to 10 carbon atoms at temperatures over 140°C and, therefore, high pressures. The disclosed process solves the problem of residual solvent in the aqueous phase (after acidulation, as described above), but it needs high temperatures and pressures, especially when hydrocarbons with lower number of carbon atoms (but more common and cheaper) are used, which requires extracting and more expensive and complex systems and sophisticated control to diminish risk under these conditions.

The process of the present invention does not have any drawback of the processes described above. Only apolar solvent is used, which is totally immiscible with water, at room temperature and pressure, in a highly efficient extraction process of unsaponifiable matter.

The first objective of the present invention is to provide an efficient process for extracting unsaponifiable matter from black liquor soaps, crude tall oil or tall oil pitch using apolar solvent or the production of refined soaps essentially free of unsaponifiable matter.

The second objective of the present invention is to provide an efficient process for producing essentially free of unsaponifiable matter refined tall oil from black liquor soaps, crude tall oil and tall oil pitch.

The third objective of the present invention is to provide an efficient process for producing low coloured, inodorous, highly pure mixture of fatty and rosin acids essentially free of unsaponifiable matter from black liquor soaps, crude tall oil or tall oil pitch.

The forth objective of the present invention is to provide an efficient process for producing low coloured, inodorous, highly pure fatty and rosin acids essentially free of unsaponifiable matter from black liquor soaps, crude tall oil or tall oil pitch.

It has been found that stable emulsification and foaming do not occur when black liquor soaps, saponified tall oil or saponified tall oil pitch are extracted with an apolar solvent, with a water content in the soap similar to or lower than 40%, preferably lower than 25. This allows an efficient separation of phases, through for example, centrifugation or decanting, into a light phase or organic extract mainly composed by the apolar solvent and the unsaponifiable matter and a heavy phase or refined soaps mainly composed by fatty and rosin acid salts. Then, the brine originated from the acidulation of the heavy phase is solvent free, allowing its further use. The previously described process is carried out under normal operation conditions.

The invention may be carried out using black liquor soaps, crude tall oil or tall oil pitch. In the first case, water content needs to be reduced under 40%, preferably lower than 25%, using the processes known in the state of art, as described in US patent N° 6,297,353.

Nevertheless, the invention is conveniently carried out with crude tall oil or tall oil pitch. Previous to the extraction stage with apolar solvent, crude tall oil or tall oil pitch is saponified to produce saponified tall oil or saponified tall oil pitch with an aqueous alkali solution, which allows the control of the water content in the saponified tall oil or saponified tall oil pitch by means of use of aqueous solutions of alkali at specific concentration.

The required amount of alkali is obtained from the saponification index of crude tall oil or tall oil pitch. Typically, small excess is used (preferably lower than 5%) over the stoichiometric value given by the saponification index. The final water content in the soap results from the reaction water calculated by the acid number of crude tall oil and tall oil pitch and the water contained in alkali solution. Saturated solutions or mixtures of alkali and solid alkali saturated solutions may be used to reduce final water content in soaps.

In order to carry out the invention, crude tall oil or tall oil pitch is saponified with an alkali solution, preferably sodium hydroxide or potassium hydroxide, to yield an saponified tall oil or saponified tall oil pitch with a water content lower than 40%, preferably lower than 25%.

The extraction may be done in batch processes or in a continuous countercurrent operation in one or more extraction stages, in agitated reactors or plate columns or packed columns or centrifuge extractor. These operations and systems are fully described in the state of art.

Apolar solvents suitable for extraction are aliphatic and aromatic hydrocarbons as petroleum ether, hexane, heptane, octane, naphtha, toluene, xylene, decane, pinene and their mixtures. In general, hydrocarbons or mixtures of hydrocarbons with lobP polarity similar to or higher than 2 are useful for the present invention.

Solvent extraction of black liquor soaps, saponified tall oil or saponified tall oil pitch is performed at temperatures in which stable emulsifications do not occur, preferably at temperature lower than boiling point of solvent, preferably lower than 40°C. Ratio of solvent extraction to suitable black liquor soap, saponified tall oil or saponified tall oil pitch solution is between 0.5:1 to 20:1, preferably lower than 5:1.

Once extraction is done and the phases are separated, it is occasionally convenient to wash the organic extract with water to remove suspended salts. The aqueous phase resulting from washing the organic extract is mixed with the refined soaps resulting from solvent extraction. The organic phase is desolventized and the residue comprising unsaponifiable matter is recovered which is raw material for obtaining phytosterols as disclosed in US patent N° 6,465,665. The distilled solvent is recycled to extraction stages.

Refined soaps or the mixtures of refined soaps and aqueous phase resulting from washing the organic extract,' contain fatty and rosin acid salts and a portion of the extraction solvent. The acidulation of refined soaps or mixture of refined soaps and aqueous phase resulting from washing of the organic extract is preferably conducted with mineral acids, such as sulphuric acid and water, in order to produce a mixture which typically is separated into two phases. An oily phase is obtained, which contains fatty acids, rosin acids and the residual solvent almost free of unsaponifiable matter, and an aqueous phase resulting from the acidulation or brine, which contains an aqueous solution of sodium sulphate and only three traces of fatty acids, rosin acids and solvent, allowing an easy use of it. The brine produced in the process of the present invention is characterized by low levels of organic pollutants in comparison to the brine resulting from the processes known in the state of art, and it can be recycled to the acidulation process.

The oily phase is conveniently desolventized and dehydrated in conventional evaporation systems at atmospheric or reduced pressure. The recovered solvent can be recycled to the extraction stages and the disolventized residue contains a mixture of fatty and rosin acids almost free of unsaponifiable matter constituting refined tall oil or RTO. Typically, RTO produced through the invented process has an acid number higher than 175, a percentage of unsaponifiable matter lower than 2% and Gardner colour of 12.

Refined tall oil may be directly used in industrial applications in detergents, surfactants, chemicals for mining and others.

An alternative for enhancing the colour of refined tall oil is distillation. This operation may be carried out in falling film evaporators or thin film evaporators or others at reduced pressure. The distillate or extracted tall oil (ETO) is characterized by being a mixture of fatty and rosin acids with an excellent colour, excellent organoleptic properties, high purity and almost free of unsaponifiable matter. Table 2 shows typical characteristics of ETO obtained through the present invention.

**Table 2:**

| **Typical properties of crude tall oil and ETO produced through the present invention** | | |
|---|---|---|
| | **Crude tall oil** | **ETO** |
| **Acid number** | 148 | 190 |
| **Saponification index** | 161 | 190 |
| **% unsaponifiable matter** | 22.3 | 0.3 |
| **Gardner colour** | > 18 | 2 |

ETO with better colour has more industrial applications, such as resin and surfactant formulations.

Fatty acids and rosin acids produced through ETO or RTO using fractionated distillation are better than fatty and rosin acids obtained from crude tall oil. Fractionating process of ETO or RTO may be conducted in distillation systems known in the state of art using alternately falling film distillation systems, thin film distillation systems, short path distillation systems in combination with packed fractionation columns at reduced pressure with or without vapour assistance and generally the same systems and processes used for fractionating CTO. US patents N°2,716,630, N°2,724,709, N°2,866,492, N°2,886,492, N°2,894,880 and N°3,644,179 describe processes that may be used for fractionating RTO or ETO.

Processes for obtaining fatty and rosin acids from the fractionation of RTO or ETO have more efficiency and yield because they need less distillation stages, shorter times for distillation, lesser reflux proportions which in combination generate lesser thermal degradation and lower volume of side streams producing better-quality products at higher yields in comparison with conventional distillation of CTO, as shown in example 5.

The processes of the present invention are further described in reference of the accompanying figures:

The diagram for Figure 1 shows a process for efficiently removing unsaponifiable matter from tall oil pitch and obtaining saponified tall oil pitch essentially free of unsaponifiable matter. The diagram for Figure 2 shows a process for producing refined tall oil from black liquor soaps. The diagram for Figure 3 describes a process for producing ETO from crude tall oil. Finally, the diagram for Figure 4 describes a process for producing highly pure fatty and rosin acids from crude tall oil.

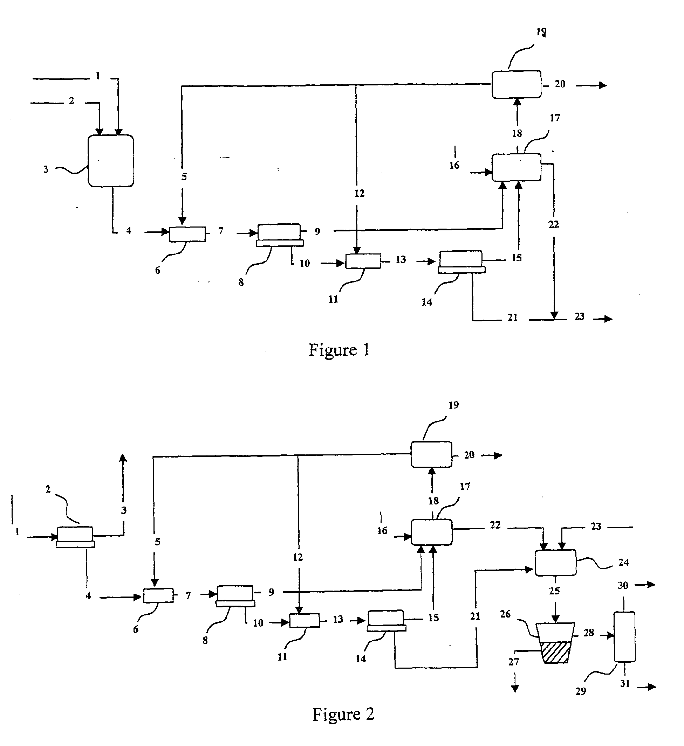

In Figure **1,** tall oil pitch is fed via line **1** to a saponification reactor **3** and simultaneously a saturated sodium hydroxide solution is fed via line **2** in a proportion equal to the saponification index or in an excess up to 20%. Reactor **3** operates at a temperature between 80 and 200°C under agitation, and at a pressure between 1 and 15 atm to generate saponified tall oil pitch. This saponified tall oil pitch is fed to the mixer **6** via line **4,** where is contacted with an apolar solvent fed via line **5,** in a ratio of apolar solvent to saponified tall oil pitch between 1:1 to 5:1. The mixture of saponified tall oil pitch and apolar solvent is fed to the centrifuge decanter **8** via line **7** at a temperature lower than 40°C. Two streams are generated from the decanter; a light organic extract stream via line **9,** which is fed to tank **17,** and a heavy refined saponified tall oil pitch stream via line **10,** which is fed to the mixer **11,** where is contacted with an apolar solvent fed via line **12** to produce a mixture which is fed to the decanter centrifuge **14** via line **13.** A light organic extract stream is removed via line **15** and fed to tank **17.** Water is fed to tank **17** via line **16** and is contacted under agitation with the light organic extract streams. A light organic extract current free of salts is removed via line **18** and fed to the evaporator **19,** where the solvent is evaporated and it can be recycled to the extraction stages. An unsaponifiable matter stram is obtained via line **20.** Finally, an aqueous heavy stream of salts is removed via line **22** and mixed with the heavy refinate stream **21,** to generate a refined saponified tall oil pitch stream **23** almost free of unsaponifiable matter.

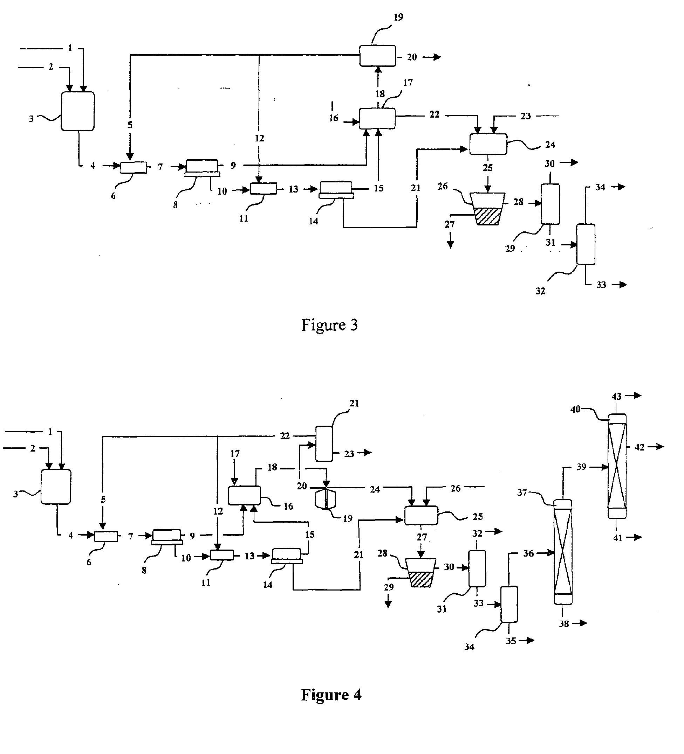

In Figure **2,** black liquor soap with a water content higher than 30% is fed to a centrifuge decanter **2** via line **1** to generate a black liquor stream via line **3** and a light black liquor soap stream via line **4** with a water content lower than 30%, which is fed to the mixer **6** and contacted with an apolar solvent fed via line **5,** in a ratio of apolar solvent to black liquor soap of 1:1 to 5:1. The mixture of black liquor soap and apolar solvent is fed to a centrifuge decanter **8** via line **7** at temperature lower than 40°C. Two streams are generated from the centrifuge decanter; a light organic extract stream via line **9,** which is fed to the tank **17,** and a heavy refined black liquor soap stream via line **10,** which is fed to the mixer **11** where is contacted with an apolar solvent fed via line **12** to produce a mixture which is fed to centrifuge decanter **14** via line **13.** A light organic extract stream is removed via line **15** and fed to tank **17.** Water is fed to tank **17** via line **16** and is contacted under agitation with the light organic extract stream. A light organic extract stream free of salts is removed via line **18** and fed to the evaporator **19,** where the solvent is evaporated and can be recycled to extraction stages. An unsaponifiable matter stream is obtained via line **20.** An aqueous heavy stream with salts is removed via line **22** and fed to acidulation reactor **24** where it is contacted with the refined black liquor soap stream **21** and sulphuric acid stream **23,** to obtain an acidulated mixture mainly comprising fatty and rosin acids and sodium sulphate. The acidulated mixture is fed to the decanter **26** via line **25,** where a brine free of solvent and organic matter stream and a light organic stream are isolated via line **27** and **28,** respectively. Stream **28** is fed to the evaporator **29** and water and residual solvent are removed via line **30** and refined tall oil via line **31.**

In Figure **3,** crude tall oil is fed to a saponification reactor **3** via line **1** and simultaneously via line **2,** a saturated sodium hydroxide solution is fed in proportionally to the saponification index or in excess up to 20%. Reactor **3** operates at a temperature between 80 and 200°C under agitation, and at a pressure between 1 and 15 atm to generate saponified tall oil. Saponified tall oil is fed to the mixer **6** via line **4** and contacted with apolar solvent fed via line **5,** in a ratio of apolar solvent to saponified tall oil of 1:1 to 5:1. The mixture of saponified tall oil and apolar solvent is fed to the centrifuge decanter **8** via line **7** at temperature lower than 40°C. Two stream are generated from the centrifuge decanter; a light organic extract stream via line **9,** which is fed to the tank **17,** and a heavy refined saponified tall oil stream via line **10,** which is fed to the mixer **11** and then contacted with apolar solvent fed via line **12** to produce a mixture which is fed to the decanter centrifuge **14** via line **13.** A light organic extract stream is removed via line **15** and fed to the tank **17.** Water is fed to the tank **17** via line **16** and contacted under agitation with the light organic extract stream. A light organic extract stream free of salts is removed via line **18** and fed to the evaporator **19** where the solvent is evaporated and can be recycled to the extraction stages. An unsaponifiable matter stream is obtained via line **20.** An aqueous heavy stream rich in salts is removed via line **22** and fed to the acidulation reactor **24** where it is contacted with the heavy refined saponified tall oil stream **21** and sulphuric acid stream **23,** to obtain an acidulated mixture mainly comprising fatty and rosin acids and sodium sulphate. The acidulated mixture is fed to the decanter **26** via line **25,** where brine free of solvent is isolated via line **27** and a light organic stream via line **28**, which is fed to evaporator **29** where water and residual solvent are removed via line **30** and refined tall oil is removed via line **31.** RTO is fed via line **31** to a thin film evaporator or short path evaporator, which operates at reduced pressure and temperature over 150°C, to generate a residue **33** and a distillate **34** of extracted tall oil or ETO.

In Figure **4,** crude tall oil is fed to a saponification reactor **3** via line **1** and simultaneously via line **2** a saturated sodium hydroxide solution is fed proportionally to the saponification index or in excess up to 20%. Reactor **3** works at temperature between 80 and 200°C under agitation to generate saponified tall oil. Saponified tall oil is fed to the mixer **6** via line **4,** where is contacted with apolar solvent fed via line **5,** in a ratio of apolar solvent to saponified tall oil pitch of 1:1 to 5:1. The mixture of saponified tall oil and apolar solvent is fed to the centrifuge decanter **8** via line **7** at temperature lower than 40°C. Two stream are generated from the decanter; a light organic extract stream via line **9,** which is fed to the tank **16,** and a heavy refined saponified tall oil stream via line **10,** which is fed to the mixer **11** and then contacted with apolar solvent fed via line **12** to produce a mixture which is fed to the centrifuge decanter **14** via line **13.** A light organic extract stream is removed via line **15** and fed to the tank **16.** Water is fed to the tank **16** via line **17** and is contacted under agitation with the light organic extract streams. The mixture is fed from the tank **16** to the centrifuge **19** via line **18.** A light organic extract stream free of salts is removed via line **20** from the centrifuge **19** and fed to evaporator **21,** where the solvent is evaporated and can be recycled to the extraction stages via line **22.** An unsaponifiable matter stream is obtained via line **23. An** heavy aqueous stream rich in salts is removed via line **24** and fed to the acidulation reactor **25** where it is contacted with the heavy refined saponified tall oil stream **21** and sulphuric acid stream **26,** to obtain an acidulated mixture mainly comprising fatty and rosin acids and sodium sulphate. The acidulated mixture is fed to the decanter **28** via line **27,** where brine free of solvent and organic matter is isolated via line **29** and a light organic stream is isolated via line **30** and fed to the evaporator **31,** where water and residual solvent are removed via line **32** and refined tall oil is removed via line **33.** RTO is fed to a thin film evaporator or falling film evaporator **34** via line **33,** which operates at reduced pressure and a temperature over 250°C, to generate a residue stream **35** and a stream **36,** which is fed to the fractionation column **37.** A highly pure rosin acid stream is removed from column **37** via line **38.** Column **40** is fed via line **39** to produce a stream **41** comprising a mixture of fatty and rosin acids almost free of unsaponifiable matter, a stream **42** comprising highly pure fatty acids, mainly oleic acid and linoleum acid and a stream **43** comprising highly pure fatty acids, mainly palmitoleic acid.

The following examples show how the invention is carried out.

### Example 1

500 g of black liquor soap with a water content of 38% and an unsaponifiable matter content of 13.1% are centrifuged at 3000 rpm for 20 minutes. 415 g of light phase comprising concentrated black liquor soap with a water content of 25% is isolated.

100 g of concentrated black liquor soap is contacted with 388 g of heptane and 12 g of toluene under agitation for 5 minutes at 20°C in a 1000 ml flask beaker. Then the mixture is centrifuged at 3000 rpm for 20 minutes and a light organic extract phase and a heavy refinate phase are recovered.

The heavy refinate phase is extracted again with 388 g of heptane and 12 g of toluene and centrifuged to recover a second light organic extract phase and a second heavy refinate phase, which is exposed to a third extraction and centrifugation with 388 g of heptane and 12 g of toluene to generate a third light organic extract phase and a third heavy refinate phase.

The three light organic extract phases are collected in a 2000-ml separating funnel and washed twice with 60 ml of water. The washed organic phase is recovered and desolventized in a rotavap until reaching a reduced pressure of 100 mmHg and 120°C in the thermostat bath. 15.7 g of unsaponifiable matter are recovered.

The third heavy refinate phase is mixed with the two aqueous washes in a reactor and are acidulated with 100 g of an aqueous solution of sulphuric acid at 10% at reflux for one hour. The mixture is decanted and two new phases are separated: an aqueous phase or brine free of organic matter and solvents and an oily phase, which is washed with water up to pH 5.

Finally, the washed oily phase is desolventized in a rotavap until reaching a reduced pressure of 100 mmHg and 120°C in the thermostated bath. 53.2 g of refined tall oil with acid number of 189.8 and unsaponifiable matter of 0.4% are recovered.

### Example 2

450 g of tall oil pitch with an acid number of 38, saponification index of 115 and unsaponifiable matter content of 37.9% are saponificated in a 2000-ml reactor connected to a reflux condenser and provided with mechanical agitation, with 75 g of sodium hydroxide at 50% at reflux for two hours, to generate a saponified tall oil pitch with a water content of 8.3%.

100 g of saponified tall oil pitch in a 1000-ml flask beaker is contacted with 250 g of hexane and 3 g of toluene under mechanical agitation for 5 minutes at 20°C. Then, the entire mixture is centrifuged at 3000 rpm for 20 minutes and a light organic extract phase and a heavy refinate phase are recovered.

The heavy refinate phase is extracted again with 250 g of hexane and 3 g of toluene and centrifuged to recover a second light organic extract phase and a second heavy refinate phase, which is processed into a third extraction and centrifugation stage with 250 g of hexane and 3 g of toluene to generate a third light organic extract phase and a third heavy refinate phase.

The three light organic extract phases are collected and mixed with 40 g of water and the mixture is centrifuged at'3000 rpm for 5 minutes. The washed and recovered organic phase is desolventized in a rotavap until reaching a reduced pressure of 100 mmHg and 120°C in the thermostated bath. 33 g of unsaponifiable matter are recovered.

Then, the third heavy refinate phase is mixed with the aqueous phase resulting from the washes and centrifuging stages of the organic extracts, and it is acidulated with 100 g of an aqueous solution of sulphuric acid at 10% at reflux for one hour. The mixture is decanted and is separated in two new phases: a heavy aqueous phase or brine free of organic matter and solvent and a new light oily phase, which is washed with water up to pH 5.

Finally, the washed oily phase is desolventized in a rotavap until reaching a reduced pressure of 100 mmHg and 120°C in the thermostated bath. 52.0 g of refined tall oil with an acid number of 187.3 and unsaponifiable matter percent of 0.3% are recovered.

### Example 3

500 g of crude tall oil with an acid number of 142, saponification index of 158 and unsaponifiable matter content of 17.0% are saponificated in a 2000-ml reactor connected to a reflux condenser provided with mechanical agitation,'with 115 g of sodium hydroxide at 50% at reflux for two hours, to generate a saponified tall oil with a water content of 13.0%.

100 g of saponified tall oil in a 1000-ml flask beaker are contacted with 300 g of hexane and 6 g of toluene under mechanical agitation for 5 minutes at 20°C. Then, the entire load is centrifuged at 3000 rpm for 20 minutes and a light organic extract phase and a heavy refinate phase are recovered.

The heavy refinate phase is extracted again with 300 g of hexane and 6 g of toluene and centrifuged to recover a second light organic extract phase and a second heavy refinate phase, which is processed into a third extraction and centrifugation stage with 300 g of hexane and 6 g of toluene to generate a third light organic extract phase and a third heavy refinate phase.

The three light organic extract phases are collected and mixed with 80 g of water and the mixture is centrifuged at 3000 rpm for 5 minutes. The washed and recovered organic phase is desolventized in a rotavap until reaching a reduced pressure of 100 mmHg and 120°C in the thermostat bath. 14.0 g of unsaponifiable matter are recovered.

Then, the third heavy refinate phase is mixed with the aqueous phase resulting from washing and centrifuging stages of organic extracts, and it is acidulated with 120 g of an aqueous solution of sulphuric acid at 10% at reflux for one hour. The mixture is decanted and is separated in two new phases: a heavy aqueous phase or brine free of organic matter and solvent and a light oily phase, which is washed with water up to pH 5.

Finally, the oily phase is desolventized in a rotavap until reaching a reduced pressure of 100 mmHg and 120°C in the thermostated bath. 66.5 g of refined tall oil with an acid number of 190.1 and unsaponifiable matter of 0.3% are recovered.

### Example 4

500 g of crude tall oil are processed according to Example 3. 391 g of refined tall oil with an acid number of 189 and a unsaponifiable matter content of 0.5% are recovered. 200 g of refined tall oil are fed to a short path distillation column from UIC model KDL-5 with a evaporation surface temperature of 200°C, condensation surface temperature of 85°C and operation pressure of 1 mmHg. 187 g of distillate or extracted tall oil or ETO with an acid number of 191 and Gadner colour 2 are obtained. The percentages for rosin and fatty acids are 56% and 43%, respectively. The percentage of unsaponifiable matter, given by SCAN T13:74 method by Nordic Standardization Programme (NSP) is 0.1%.

### Example 5

1000 g of crude tall oil are processed according to Example 3. 780 g of refined tall oil with an acid number of 189 and a percentage of unsaponifiable matter of 0.3% are recovered.

500 g of refined tall oil are charged in a 1000-ml round flask connected to a 66-cm packed fractionation column with 3-mm aleatory Poropack packing and a distillation condenser head with reflux control.

Distillation is performed at a reduced pressure of 3 mmHg and a reboiler temperature between 200 and 370°C; the distillate is separated into five fractions analyzed using gas chromatography. The distillation objective is to generate a fraction 1 comprising fatty acids with less than 18 carbon atoms, a fraction 2 with fatty acids with 18 carbon atoms free of rosin acids, a fraction 3 comprising a mixture of fatty and rosin acids, a fraction 4 comprising rosin acids free of fatty acids and a fraction 5 or distillation residue.

Similarly, 500 g of crude tall oil used in Example 3 are distilled under the same equipment configuration, operation and control conditions used in the distillation of refined tall oil in order to compare the products and the process performance of crude tall oil and refined tall oil.

Table 3 shows the comparative results of fractionated distillation of crude tall oil and refined tall oil.

As shown in Table 3, the fatty acid fraction (fraction 2) and rosin acid fraction (fraction 4) obtained through the distillation of refined tall oil have better quality than their respective fractions obtained through the distillation of crude tall oil. Besides, a notable improvement can be observed in the organoleptic properties of the fractions obtained through the distillation of refined tall oil.

**Table 3:**

| **Characterization of distillations fractions from CTO and RTO** | | |
|---|---|---|
| | **Crude tall oil** | **Refined tall oil** |
| **Fraction 1** | | |
| **Acid number** | 154.0 | 212.0 |
| **Unsaponifiable matter percent** | 27.0 | 0.6 |
| **Fatty acid percent** | 71.0 | 98.6 |
| **Rosin acid percent** | 0.0 | 0.0 |
| **Gardner colour** | 8 | 1 |

| **Fraction 2** | | |
|---|---|---|
| **Acid number** | 184.5 | 199.2 |
| **Unsaponifiable matter percent** | 7.2 | 0.4 |
| **Fatty acid percent** | 90.7 | 97.8 |
| **Rosin acid percent** | 2.2 | 2.0 |
| **Gardner colour** | 5 | 1 |

| **Fraction 3** | | |
|---|---|---|
| **Acid number** | 156.2 | 189.1 |
| **Unsaponifiable matter percent** | 18.4 | 0.5 |
| **Fatty acid percent** | 41.1 | 57.2 |
| **Rosin acid percent** | 40.2 | 41.1 |
| **Gardner colour** | 6 | 1 |

| **Fraction 4** | | |
|---|---|---|
| **Acid number** | 162.7 | 182.7 |
| **Unsaponifiable matter percent** | 12.6 | 0.5 |
| **Fatty acid percent** | 2.3 | 0.7 |
| **Rosin acid percent** | 85.7 | 98.9 |
| **Gardner colour** | 7 | 1 |

Graph 1 shows time and performance of distillation obtained from fractionated distillations of crude tall oil and refined tall oil.

As shown in Graph 1, the distillation of refined tall oil was carried out in half of the time required in the distillation of crude tall oil, which yields to a positive impact on the economy of the distillation process. Furthermore, recovery performance of fatty and rosin acid fractions from the distillation of refined tall oil is highly superior to the distillation of crude tall oil, having a positive impact on the process productivity.

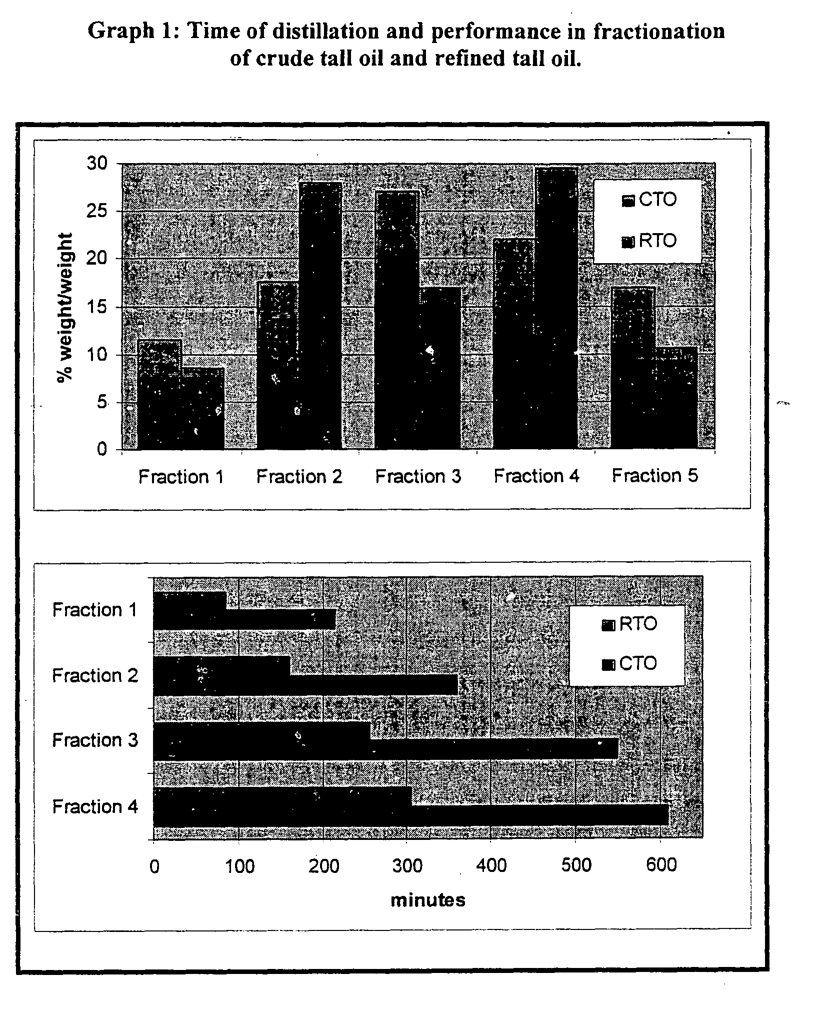

## Claims

1. A process for refining crude tall oil **CHARACTERISED in that** it is carried out by the following steps:
a) saponifying crude tall oil with sodium or potassium hydroxide to form saponified crude tall oil comprising unsaponifiable matter, sodium or potassium soaps of fatty acids and rosin acids and 25 % in weight or less of water;
b) contacting saponified crude tall oil with a liquid hydrocarbon forming a liquid mixture, and
c) separating from the mixture formed in step b) the hydrocarbon substantially free of water and comprising unsaponifiable matter and an aqueous solution of fatty acids and rosin acids substantially free of the hydrocarbon.

2. A process according to claim 1, **CHARACTERISED in that** the saponifying of the crude tall oil is carried out with sodium or potassium hydroxide comprising less than 10 % in weight of water.

3. A process according to claim 1, **CHARACTERISED in that** the saponifying of the crude tall oil is carried out with an aqueous solution of sodium or potassium hydroxide comprising less than 50 % in weight of water.

4. A process according to claim 1, **CHARACTERISED in that** the saponifying of the stude tall oil is carried out with saturated aqueous solution of sodium or potassium hydroxide or with sodium or potassium hydroxide comprising less than 10 % in weight of water.

5. A process according to any preceding claim, **CHARACTERISED in that** the saponified crude tall oil comprises less than 15 % in weight of water.

6. A process according to claim 5, **CHARACTERISED in that** the aqueous solution of fatty acids and rosin acids substantially free of the hydrocarbon of step c) is contacted with sulphuric acid to form a mixture comprising water, sodium or potassium sulphate, fatty acids and rosin acids.

7. A process according to claim 6, **CHARACTERISED in that** a mixture of fatty acids and the rosin acids are separated from the water and the sodium or potassium sulphate.

8. A process according to claim 7, **CHARACTERISED in that** the mixture of fatty acids and rosin acids is vacuum fractionated to form a first fraction comprising fatty acids and a second fraction comprising rosin acids.
